# FASCICULE DE BREVET EUROPEEN

(11) **EP 2 943 403 B1**
(45) Date de publication et mention de la délivrance du brevet: **09.08.2017**
(21) Numéro de dépôt: 14700297.6
(22) Date de dépôt: 10.01.2014
(51) Int. Cl.: B64C 25/00, B64D 45/00, F16C 11/04

(54) **ORGANE FUSIBLE DESTINE A REUNIR DEUX CHAPES POUR FORMER UNE ARTICULATION**
SCHERBOLZEN ZUM VERBINDEN ZWEIER JOCHE ZU EINEM SCHARNIER
SHEAR PIN MEMBER INTENDED TO JOIN TWO YOKES TO FORM A HINGE

(30) Priorité: 10.01.2013 FR 1350205
(43) Date de publication de la demande: 18.11.2015
(73) Titulaire: Safran Landing Systems, 78140 Vélizy-Villacoublay (FR)
(72) Inventeur: ANTONI, Nicolas, 78140 Velizy-Villacoublay (FR)
(74) Mandataire: Parzy, Benjamin Alain
(86) Numéro de dépôt international: PCT/EP2014/050385
(87) Numéro de publication internationale: WO 2014/108503

(56) Documents cités:
- EP-A1- 1 060 986
- DE-A1-102009 043 567
- GB-A- 2 452 938
- GB-A- 2 452 939

## Description

L'invention concerne une liaison de deux éléments mécaniques équipés respectivement d'une chape double et d'une chape simple solidarisée à la chape double par un organe fusible de type axe mécanique tubulaire ou goupille.

### ARRIERE PLAN DE L'INVENTION

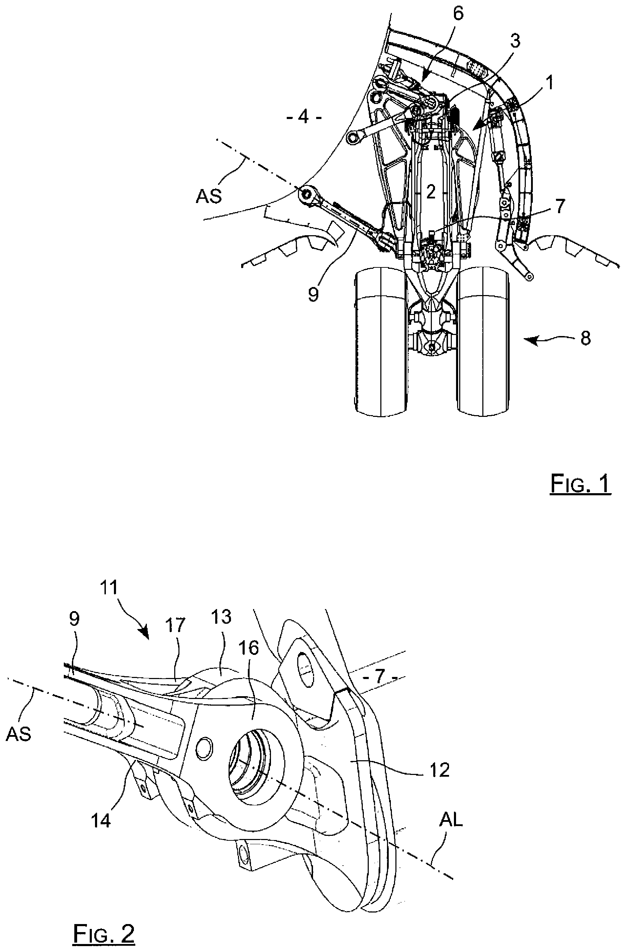

On trouve une telle liaison typiquement dans les composants d'un atterrisseur escamotable d'aéronef, tel que l'atterrisseur 1 qui est représenté déployé dans la figure 1. Un tel atterrisseur comporte une jambe 2 ayant une extrémité supérieure 3 solidarisée à un élément de structure 4 de l'aéronef, par un ensemble de bielles supérieures 6 articulées. L'extrémité inférieure 7 de cette jambe 2 porte un train roulant 8 tout en étant solidarisée à la structure par une bielle latérale 9 ayant une extrémité articulée à la structure 4 et son autre extrémité articulée à une partie inférieure de la jambe 2.

Les différentes bielles 6, 9, ainsi que d'autres éléments sont articulés à la structure 4 et à la jambe 2 selon un agencement qui permet une cinématique de déploiement et de repli de l'atterrisseur, tout en assurant un maintien ferme de l'atterrisseur par rapport à la structure de l'aéronef lorsque cet atterrisseur est déployé.

En position de service, c'est-à-dire lorsque l'atterrisseur est déployé, la bielle latérale 9 s'étend dans un plan transversal par rapport à la direction longitudinale de l'aéronef, en s'étendant selon un axe AS qui est incliné par rapport à l'horizontale. L'extrémité de la bielle 9 qui est reliée à la jambe 2 est ainsi significativement plus basse que son extrémité opposée qui est reliée à la structure 4.

La liaison 11 par laquelle la bielle 9 est reliée à la partie inférieure de la jambe 2 est prévue fusible : si les efforts que subit la bielle 9 sont supérieurs à un certain seuil, ce qui correspond à une situation d'atterrissage accidentel, cette liaison 11 se casse. Cette rupture programmée de la liaison 11 a pour but d'assurer qu'en cas d'accident, la bielle 9 ne risque pas de traverser la paroi de la structure 4 pour venir blesser les passagers de l'aéronef.

Comme visible dans la figure 2, la liaison 11 comporte une chape simple 12 comportant une aile unique 13, qui est rigidement solidaire de la partie inférieure 7 de la jambe 2, et une chape double 14 comportant deux ailes 16 et 17 et qui constitue l'extrémité de la bielle 9.

La chape simple 12 s'engage entre les ailes de la chape double 14, et ces chapes sont solidarisées l'une à l'autre par un organe de liaison tel qu'un axe mécanique tubulaire ou bien une goupille, qui traverse les ailes en s'étendant selon un axe longitudinal AL, pour les réunir en formant une articulation.

C'est cet axe mécanique qui constitue l'organe fusible de la liaison, en ayant une forme tubulaire de révolution dont le diamètre interne et le diamètre externe sont choisis pour que la section courante ait une aire de valeur prédéterminée. Cette aire est suffisante pour garantir la tenue mécanique de la pièce en fonctionnement normal, mais elle est suffisamment faible pour provoquer la rupture par cisaillement au niveau des deux espaces situés entre la chape 12 et les chapes 16 et 17, en cas d'application d'un effort trop important à la liaison 11. Le document GB 2452938 A divulgue les caractéristiques du préambule de la revendication 1. La conception d'un tel organe fusible doit répondre à deux contraintes antinomiques : l'organe doit avoir une tenue mécanique lui permettant de supporter un certain nombre d'atterrissages sans se rompre, c'est-à-dire une certaine tenue à la fatigue, mais il doit au contraire se rompre de la façon prédictible dès que la charge mécanique appliquée à la liaison est supérieure à un seuil.

Comme les contraintes de tenue à la fatigue et de rupture à partir d'un certain seuil de charge sont difficilement conciliables, cela conduit à concevoir un organe fusible ayant une tenue à la fatigue limitée, ce qui implique de le changer de manière trop fréquente.

### OBJET DE L'INVENTION

Le but de l'invention est de proposer une solution de conception permettant de concilier les contraintes de tenue à la fatigue et de seuil de rupture pour un tel organe fusible.

### RESUME DE L'INVENTION

A cet effet, l'invention a pour objet un organe fusible tubulaire s'étendant selon un axe longitudinal, destiné à s'engager dans une chape double et dans une chape simple pour les réunir en formant une articulation, tout en étant solidarisé en rotation à l'une de ces chapes :
- cet organe fusible tubulaire comportant une portion centrale et deux portions distales, la portion centrale étant engagée dans la chape simple et les deux portions distales étant engagées chacune dans une aile de la chape double lorsque l'organe fusible est en place dans ces chapes ;
- cet organe fusible travaillant en flexion lorsque l'articulation est dans une position de service en étant soumise à des efforts de service ayant une orientation prédéterminée par rapport à la chape à laquelle l'organe fusible est solidarisé en rotation, cette flexion s'exerçant dans un plan de flexion qui contient l'axe longitudinal et qui est orienté selon l'orientation prédéterminée des efforts de service ;

- cet organe fusible se rompant par cisaillement entre sa portion centrale et chaque portion distale lorsque les efforts de service ont une intensité selon un axe perpendiculaire à l'axe longitudinal qui est supérieure à une valeur seuil prédéterminée ;
- cet organe fusible présentant une section transversale dont la forme évolue graduellement entre une section centrale et deux sections distales, chaque section distale ayant une épaisseur renforcée dans ses régions s'étendant parallèlement au plan de flexion, la section centrale ayant un moment quadratique par rapport à un axe normal au plan de flexion qui est supérieur au moment quadratique des sections distales.

L'invention concerne également un organe fusible tel que défini ci-dessus, ayant une surface externe de cylindre à base circulaire.

L'invention concerne également un organe fusible tel que défini ci-dessus, dans lequel les sections distales ont un contour interne ayant une forme elliptique dont le grand axe est orienté parallèlement au plan de flexion.

L'invention concerne également un organe fusible tel que défini ci-dessus, dans lequel la section centrale présente un contour interne circulaire.

L'invention concerne également un organe fusible tel que défini ci-dessus, dans lequel la section centrale présente un contour interne elliptique dont le grand axe est orienté perpendiculairement au plan de flexion.

### BREVE DESCRIPTION DES FIGURES

La figure 1 est une vue de face d'un atterrisseur d'aéronef déployé comportant une bielle latérale articulée ;
La figure 2 est une vue de détail montrant en perspective une articulation reliant une bielle latérale à une jambe d'atterrisseur ;
La figure 3 est une vue en coupe d'une articulation reliant une bielle latérale à une jambe d'atterrisseur et comportant un organe fusible conforme à l'État de la technique ;
La figure 4 est une vue latérale des résultats d'un essai réalisé avec organe fusible de l'Etat de la technique monté de manière à être bloqué en rotation par rapport à une chape et dans lequel est apparue une amorce de rupture en fatigue ;
La figure 5 est une vue en coupe d'une articulation reliant une bielle latérale à une jambe d'atterrisseur comportant un organe fusible selon l'invention ;
La figure 6 est une vue en coupe transversale d'une région distale d'un organe fusible selon l'invention ;
La figure 7 est une vue en coupe transversale d'une région centrale d'un organe fusible selon l'invention.

### DESCRIPTION DETAILLEE DE L'INVENTION

L'idée à la base de l'invention réside dans le constat selon lequel lorsque l'organe fusible de l'Etat de la technique est correctement dimensionné vis-à-vis du seuil d'effort de rupture, et qu'il est monté de manière à être bloqué en rotation, sa rupture prématurée en fatigue donne lieu à une ou des amorces de rupture apparaissant toujours dans les mêmes régions de l'organe fusible.

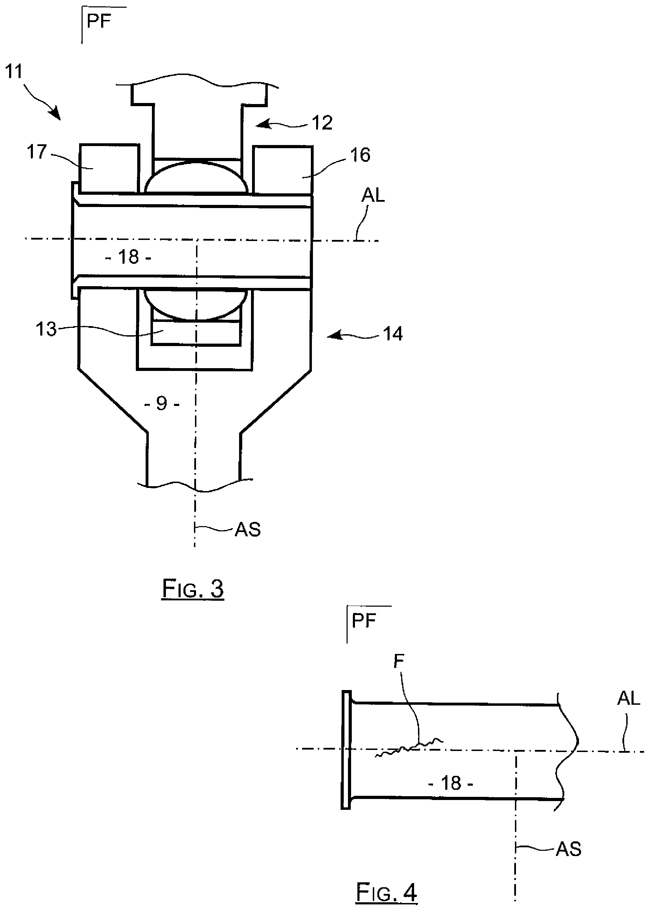

Comme le montre la figure 3 dans laquelle on a représenté en coupe la liaison 11 des figures 1 et 2, les efforts auxquels sont soumis l'organe fusible 18 lors de chaque atterrissage sont toujours orientés de la même façon, de sorte qu'ils sollicitent l'organe fusible 18 à chaque fois de la même manière.

L'organe fusible 18 subit l'effort de service qui est orienté parallèlement à l'axe AS en comportant deux composantes appliquées respectivement au niveau de l'aile 16 et de l'aile 17 de la chape 14, et la réaction de l'aile unique 13 de la chape simple 12. Autrement dit, tous les efforts subis par l'organe fusible sont orientés principalement parallèlement à l'axe AS en étant appliqués à différentes positions le long de l'axe longitudinal AL.

Il s'ensuit que l'organe fusible 18, est toujours soumis au même cas de charge lors d'un atterrissage, ce qui donne lieu à une sollicitation en flexion dans un plan noté PF qui contient l'axe AS de la bielle et l'axe longitudinal AL de l'organe fusible 18. En réalisant des essais, il est ainsi apparu que lorsque l'organe fusible 18, qui est ici un simple axe tubulaire à section circulaire, est retenu en rotation autour de son axe longitudinal, en étant par exemple bloqué en rotation par rapport à la chape 12 ou 14, alors les amorces de rupture apparaissent toujours dans les mêmes régions de l'axe.

Chaque amorce de rupture se présente sous la forme d'une fissure F s'étendant selon une direction oblique par rapport à l'axe longitudinal AL et par rapport à l'axe d'application des efforts AS, cette fissure étant formée à la surface interne et/ou externe de l'organe 18. Cette forme correspond à une amorce de rupture en cisaillement de flexion qui résulte d'une sollicitation répétée de l'axe AS en flexion dans le plan PF.

L'organe 18 étant bloqué en rotation, il travaille en fléchissant toujours dans le même plan de flexion, noté PF, qui est le plan contenant l'axe longitudinal AL et l'axe d'application des efforts AS.

En pratique, chaque fissure F apparaît au niveau d'une portion d'extrémité de l'organe 18, c'est-à-dire l'une et/ou l'autre des régions de l'organe 18 qui est engagée dans une aile 16 ou 17 de la chape double 14. Mais de plus, ces fissures F apparaissent toujours aux mêmes endroits autour de l'axe longitudinal AL : elles apparaissent dans les régions de la face interne et/ou externe de l'organe qui s'étendent parallèlement au plan de flexion PF.

On a ainsi des fissures de cisaillement de flexion résultant des cycles de fatigue, qui apparaissent dans quatre régions de l'organe fusible, situées le long de l'organe 18 à hauteur sensiblement des ailes de la chape double et situées autour de son axe longitudinal dans les zones s'étendant parallèlement au plan de flexion PF.

Selon l'invention, les contraintes de tenue en fatigue et de rupture prédéfinies sont conciliées en prévoyant un organe fusible dont la section évolue tout au long de son axe longitudinal, pour présenter des surépaisseurs dans les régions d'apparition des amorces de rupture qui se trouvent à proximité des extrémités de l'organe fusible, et un moment quadratique axial accru dans sa portion centrale.

Les surépaisseurs sont ainsi situées au niveau des régions où pourraient apparaître les amorces de rupture par cisaillement de flexion de façon à éviter l'apparition de ces amorces. Dans les autres régions de la même section transversale, l'épaisseur est ainsi plus réduite, ce qui permet de conserver une aire de section appropriée pour respecter le critère de rupture prédéterminée.

Pour compenser la diminution du moment quadratique d'inertie autour d'un axe normal au plan de flexion qui fragilise l'organe fusible vis-à-vis de la flexion, la section de la portion centrale est au contraire prévue avec une forme qui lui confère un moment quadratique plus important que les autres sections, autour d'un axe normal au plan de flexion.

On entend ici par moment quadratique, le moment quadratique qui conditionne la résistance à la flexion dans le plan de flexion où travaille l'organe fusible quand il est sollicité, c'est-à-dire le moment quadratique axial autour d'un axe normal au plan de flexion, et non pas le moment quadratique polaire.

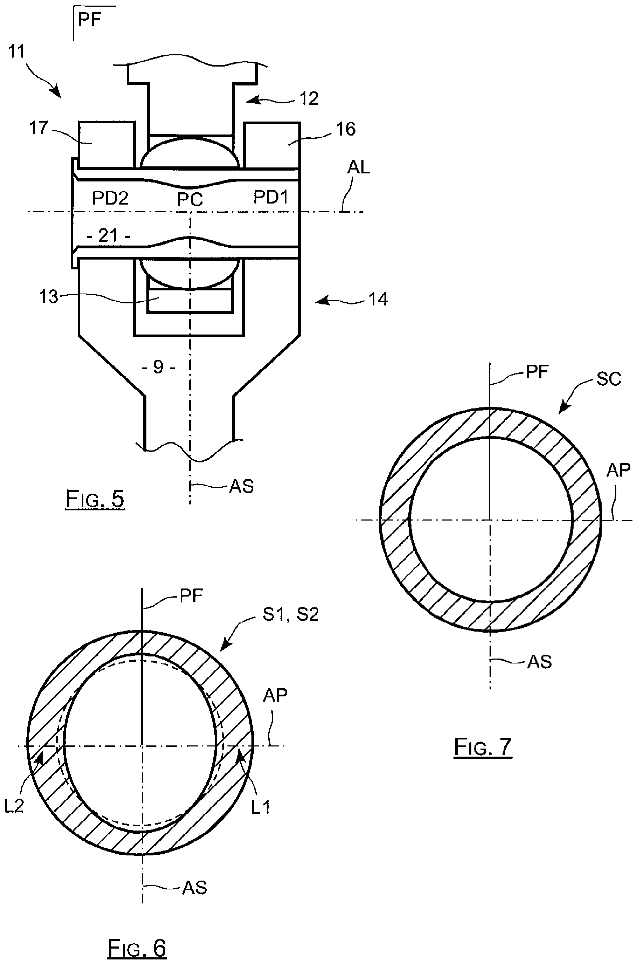

Comme représenté dans les figures 5 à 7, l'organe fusible selon l'invention qui est repéré par 21 équipe une chape qui est rotulée, mais l'invention ne nécessite aucunement que la chape soit du type rotulée. Comme visible dans ces figures, l'organe fusible selon l'invention présente une section qui varie selon trois portions, à savoir une portion centrale PC qui coïncide avec la partie engagée dans l'aile unique 13 de la chape simple 12, et deux portions distales PD1 et PD2 qui coïncident avec les parties qui sont engagées respectivement dans les ailes 16 et 17 de la chape double 14.

Dans l'exemple des figures 5 à 7, l'organe fusible est une pièce généralement tubulaire dont la surface externe a une forme de cylindre à base circulaire présentant une extrémité évasée pour former arrêtoir, et c'est la forme du contour interne de la section qui évolue tout au long de l'axe longitudinal AL.

Dans les portions distales PD1 et PD2, l'organe fusible présente des sections transversales, respectivement S1 et S2, de même forme représentée en figure 6. Ces sections présentent ainsi un contour externe circulaire, mais un contour interne qui est elliptique en étant orienté de telle manière que le grand axe de l'ellipse qu'il forme s'étend dans le plan de flexion PF.

Cette forme interne elliptique avec son orientation permet ainsi de constituer des surépaisseurs latérales L1 et L2 dans les régions des sections S1, S2 qui s'étendent parallèlement au plan de flexion PF, de façon à réduire la possibilité de formation d'amorces de rupture de cisaillement de flexion dans ces régions.

Complémentairement, cette forme elliptique constitue des amincissements dans les deux régions opposées, à savoir les régions qui interceptent le plan de flexion PF. Ces amincissement permettent de conserver à aux sections S1 et S2 une aire totale suffisamment faible, correspondant à une valeur prédéterminée provoquant une rupture en cas d'efforts de service supérieurs à une valeur seuil.

L'organe fusible 21 présente dans sa portion centrale PC une section transversale SC qui est différente des sections S1 et S2, et qui est ici une simple section circulaire d'épaisseur constante : le contour interne de la section SC est circulaire.

Cette forme de section centrale présente l'avantage d'avoir un moment quadratique autour d'un axe AP normal au plan de flexion qui est supérieur au moment quadratique des sections S1 et S2 autour d'axes correspondants normaux au plan PF. La section centrale peut avantageusement avoir une aire qui correspond à l'aire des sections S1 et S1.

Autrement dit, la forme des sections S1 et S2 présente l'intérêt de former des surépaisseurs dans les régions d'apparition d'amorces de rupture, mais elle induit des amincissements dans les régions opposées qui pénalisent le moment quadratique en le diminuant. Il s'ensuit que ces sections S1 et S2 tendent malgré tout à affaiblir l'organe 21 en matière de tenue à la flexion dans un plan PF.

Cet abaissement du moment quadratique dans les portions distales PD1 et PD2 est compensé par un accroissement du moment quadratique dans les sections de la portion centrale RC. L'organe fusible 21 selon l'invention présente ainsi une tenue à la flexion qui reste comparable à celle qu'aurait un organe tubulaire de section constante de l'état de la technique.

Par ailleurs, comme visible dans les figures 5 à 7, le contour interne de la section de l'organe fusible creux 21 évolue de façon graduelle tout au long de son axe longitudinal AL de manière à ne pas présenter d'angle ou d'irrégularité susceptible de faciliter l'apparition d'amorces de ruptures non prévues.

Une telle forme interne peut par exemple être obtenue par usinage à commande numérique avec plusieurs passes, préalablement à une ou des opérations de polissage de la surface interne obtenue.

D'une manière générale, l'invention s'applique aux cas des axes fusibles de faible épaisseur, c'est-à-dire aux axes fusibles dont le rapport du diamètre à l'épaisseur est supérieur à six.

Comme indiqué plus haut, l'organe fusible selon l'invention est destiné à être arrêté en rotation par rapport à l'une des chapes qu'il réunit. Cet arrêt en rotation peut être assuré au moyen d'un plot ou analogue s'engageant dans un perçage radial réalisé sur l'aile unique de la chape simple, ce plot venant ainsi s'engager dans un perçage correspondant radial réalisé dans l'organe fusible.

D'autres solutions peuvent être envisagées pour bloquer l'organe en rotation, comme par exemple un plot orienté longitudinalement en étant enfiché à travers une face externe de l'une des ailes de la chape double, et un perçage correspondant réalisé dans un évasement d'extrémité de l'organe fusible. Dans ce cas, lors du montage, le plot longitudinal s'engage dans le perçage de l'évasement pour le bloquer en rotation par rapport à la chape double.

## Revendications

1. Organe fusible tubulaire (21) s'étendant selon un axe longitudinal (AL), destiné à s'engager dans une chape double (14) et dans une chape simple (12) pour les réunir en formant une articulation (11), tout en étant solidarisé en rotation à l'une de ces chapes (12, 14) :
- cet organe fusible tubulaire (21) comportant une portion centrale (PC) et deux portions distales (PD1, PD2), la portion centrale (PC) étant engagée dans la chape simple (12) et les deux portions distales (PD1, PD2) étant engagées chacune dans une aile (16, 17) de la chape double (14) lorsque l'organe fusible (21) est en place dans ces chapes (12, 14) ;
- cet organe fusible (21) travaillant en flexion lorsque l'articulation (11) est dans une position de service en étant soumise à des efforts de service ayant une orientation prédéterminée (AS) par rapport à la chape à laquelle l'organe fusible est solidarisé en rotation, cette flexion s'exerçant dans un plan de flexion (PF) qui contient l'axe longitudinal (AL) et qui est orienté selon l'orientation prédéterminée (AS) des efforts de service ;
- cet organe fusible (21) se rompant par cisaillement entre sa portion centrale (PC) et chaque portion distale (PD1, PD2) lorsque les efforts de service ont une intensité selon un axe perpendiculaire à l'axe longitudinal (AL) qui est supérieure à une valeur seuil prédéterminée ;
- cet organe fusible (21) présentant une section transversale dont la forme évolue graduellement entre une section centrale (SC) et deux sections distales (SD1, SD2),
l'organe fusible étant **caractérisé en ce que** chaque section distale (SD1, SD2) ayant une épaisseur renforcée dans ses régions (L1, L2) s'étendant parallèlement au plan de flexion (PF), la section centrale (SC) ayant un moment quadratique par rapport à un axe (AP) normal au plan de flexion (PF) qui est supérieur au moment quadratique des sections distales (SD1, SD2).

2. Organe fusible selon la revendication 1, ayant une surface externe de cylindre à base circulaire.

3. Organe fusible selon la revendication 1, dans lequel les sections distales (SD1, SD2) ont un contour interne ayant une forme elliptique dont le grand axe est orienté parallèlement au plan de flexion (PF).

4. Organe fusible selon la revendication 1, dans lequel la section centrale (SC) présente un contour interne circulaire.

5. Organe fusible selon la revendication 1, dans lequel la section centrale (SC) présente un contour interne elliptique dont le grand axe est orienté perpendiculairement au plan de flexion (PF).

## Patentansprüche

1. Rohrförmiges Scherelement (21), das sich entlang einer Längsachse (AL) erstreckt und dazu bestimmt ist, in einen doppelten Gabelkopf (14) und in einen einfachen Gabelkopf (12) einzugreifen, um diese zu verbinden und dabei eine Gelenkverbindung (11) auszubilden, während es drehfest mit einem dieser Gabelköpfe (12, 14) verbunden ist:
- wobei dieses rohrförmige Scherelement (21) einen zentralen Abschnitt (PC) und zwei distale Abschnitte (PD1, PD2) umfasst, wobei der zentrale Abschnitt (PC) mit dem einfachen Gabelkopf (12) in Eingriff steht und die beiden distalen Abschnitte (PD1, PD2) jeweils mit einem Flügel (16, 17) des doppelten Gabelkopfes (14) in Eingriff stehen, wenn das Scherelement (21) in diesen Gabelköpfen (12, 14) angebracht ist;
- wobei das Scherelement (21) auf Biegung beansprucht wird, wenn die Gelenkverbindung (11) in einer Betriebsposition ist, indem sie Betriebskräften ausgesetzt ist, die eine vorgegebene Ausrichtung (AS) in Bezug auf denjenigen Gabelkopf haben, mit dem das Scherelement drehfest verbunden ist, wobei diese Biegung in einer Biegeebene (PF) ausgeübt wird, die die Längsachse (AL) enthält und die gemäß der vorgegebenen Ausrichtung (AS) der Betriebskräfte ausgerichtet ist;
- wobei dieses Scherelement (21) durch Scherung zwischen seinem zentralen Abschnitt (PC) und jedem distalen Abschnitt (PD1, PD2) bricht, wenn die Betriebskräfte eine Intensität entlang einer zur Längsachse (AL) senkrechte Achse haben, die größer als ein vorgegebener Schwellwert ist;
- wobei dieses Scherelement (21) einen Querschnitt aufweist, dessen Form nach und nach zwischen einem zentralen Querschnitt (SC) und zwei distalen Querschnitten (SD1, SD2) zunimmt;
wobei das Scherelement **dadurch gekennzeichnet ist, dass** jeder distale Querschnitt (SD1, SD2) eine verstärkte Dicke in seinen sich parallel zur Biegeebene (PF) erstreckenden Bereichen (L1, L2) hat, wobei der zentrale Querschnitt (SC) ein quadratisches Moment in Bezug auf eine zur Biegeebene (PF) senkrechte Achse (AP) hat, das größer als das quadratische Moment der distalen Querschnitte (SD1, SD2) ist.

2. Scherelement nach Anspruch 1, das eine Außenfläche in Form eines Zylinders mit kreisförmiger Basis hat.

3. Scherelement nach Anspruch 1, bei dem die distalen Querschnitte (SD1, SD2) eine Innenkontur mit einer elliptischen Form haben, deren große Achse parallel zur Biegeebene (PF) ausgerichtet ist.

4. Scherelement nach Anspruch 1, bei dem der zentrale Querschnitt (SC) eine kreisförmige Innenkontur aufweist.

5. Scherelement nach Anspruch 1, bei dem der zentrale Querschnitt (SC) eine elliptische Innenkontur aufweist, deren große Achse senkrecht zur Biegeebene (PF) ausgerichtet ist.

## Claims

1. A tubular fusible member (21) extending along a longitudinal axis (AL) for engaging in a two-lug clevis (14) and a single-lug clevis (12) in order to unite them and form a hinge (11), while being constrained in rotation relative to one of the clevises (12, 14):
• the tubular fusible member (21) having a central portion (PC) and two distal portions (PD1, PD2), the central portion (PC) being engaged in the single-lug clevis (12) and the two distal portions (PD1, PD2) each being arranged in respective lugs (16, 17) of the two-lug clevis (14) when the fusible member (21) is in place in the clevises (12, 14);
• the fusible member (21) being stressed in bending when the hinge (11) is in a service position, the member being subjected to service forces in a predetermined direction (AS) relative to the clevis to which the fusible member is constrained in rotation, this bending acting in a bending plane (PF) that contains the longitudinal axis (AL) and that extends in the predetermined direction (AS) of the service forces;
• the fusible member (21) rupturing in shear between its central portion (PC) and each distal portion (PD1, PD2) when the service forces have a magnitude along an axis perpendicular to the longitudinal axis (AL) that is greater than a predetermined threshold value; and
• the fusible member (21) presenting a cross-section of shape that varies gradually between a central section (SC) and two distal sections (SD1, SD2),
the fusible member being **characterized in that** each distal section (SD1, SD2) has thickness that is reinforced in its regions (L1, L2) extending parallel to the bending plane (PF), the central section (SC) having a second moment of area relative to an axis (AP) normal to the bending plane (PF) that is greater than the second moment of area of the distal sections (SD1, SD2).

2. A fusible member according to claim 1, having an outside surface in the form of a cylinder of circular base.

3. A fusible member according to claim 1, wherein the distal sections (SD1, SD2) have an inside outline of elliptical shape with the major axis extending parallel to the bending plane (PF).

4. A fusible member according to claim 1, wherein the central section (SC) presents an inside outline that is circular.

5. A fusible member according to claim 1, wherein the central section (SC) presents an inside outline that is elliptical of major axis that extends perpendicularly to the bending plane (PF).
